# EUROPEAN PATENT APPLICATION

(11) **EP 1 602 832 A1**
(43) Date of publication of application: **07.12.2005**
(21) Application number: 04012998.3
(22) Date of filing: 02.06.2004
(51) Int. Cl.: F15B 15/14, F15B 1/24

(54) **Double-acting operating cylinder**

(71) Applicant: Tecnica dell'aria S.r.l., 20126 Bergamo (BG) (IT)
(72) Inventor: Birelli, Raffaello, 24124 Bergamo (BG) (IT)
(74) Representative: Ripamonti, Enrico

(57) **Abstract**

The double-acting operating cylinder (1) comprises a tubular body (2) provided with a base (3) and a head (4), and within which a piston (6) is slidable. The cylinder (1) presents, defined between the piston (6) and the base (3) and between the piston (6) and the head (4), a first and a second variable volume chamber (8, 9), each arranged to receive an operating fluid. The piston (6) presents at least a first and a second gasket (18, 19) to prevent seepage of the operating fluid between the chambers (8, 9). The cylinder presents at least one conduit (21) provided with an end opening into a region interposed between the first and the second gasket (18, 19) of the piston (6), and an opposite end opening outside the cylinder (1), to discharge to the outside the fluid which seeps past the gaskets (18, 19).

## Description

The present invention relates to a double-acting operating cylinder.

Hereinafter reference will be made in particular to double-acting cylinders of hydraulic type or pneumatic type, or to mixed hydraulic and pneumatic type.

Cylinders are known to comprise a tubular body within which a piston (provided with gaskets) slides to define two variable volume chambers, indicated by A and B into which an operating fluid is fed.

On entering or leaving the operating chambers A and B, the operating fluid moves the piston (and consequently a rod connected thereto), to cause a machine member to operate.

In other cases, cylinders are used to move a machine member into a determined position and to maintain it in that position; for example the cylinder may be used to raise a platform and to maintain it in a certain position, also for a lengthy period.

However, it has been found that traditional cylinders present the considerable drawback of not being able to maintain the predetermined position stably for sufficiently lengthy periods and, in any event, are unable to ensure the stable maintaining of a certain position for very lengthy time periods.

In this respect, the piston gaskets are never perfect but always allow seepage of operating fluid (even if very limited).

Consequently, when the piston is moved into a certain position and maintained thereat, with the passage of time a certain quantity of fluid passes from one or both the operating chambers A and/or B to an intermediate region C lying between the gaskets, the piston and the cylinder wall.

This causes a pressure increase in the region C and a pressure decrease in the chamber A and/or B.

When the pressure in the region C becomes equal to the lower of the pressures in the operating chambers (for example in the chamber B), the gasket interposed between the chamber B and the region C becomes totally ineffective; in this situation the cylinder moves towards the chamber B.

The result is a pressure increase in the chamber B and a pressure decrease in the chamber A; when the pressure in the chamber B becomes greater than the pressure in the chamber A, the piston begins to move in the reverse direction, towards the chamber A.

At this point the pressure in chamber A increases whilst that in chamber B decreases till the piston begins to move in the reverse direction towards the chamber A begins greater than the pressure in chamber B.

In practice the piston begins to wobble, moving with reciprocating movement about an equilibrium position.

The technical aim of the present invention is therefore to provide a double-acting operating cylinder by which the stated technical drawbacks of the known art are eliminated.

Within the scope of this technical aim, an object of the invention is to provide an operating cylinder which, when brought into a certain position, is able to maintain it for lengthy periods without problems due to possible piston wobble.

In particular, the cylinder of the invention is able to maintain the piston in an intermediate position within the cylinder (i.e. with both operating chambers containing fluid) without wobble problems.

This technical aim, together with these and other objects, are attained according to the present invention by a double-acting operating cylinder comprising a tubular body provided with a base and a head, and within which a piston is slidable, said cylinder presenting, defined between said piston and said base and between said piston and said head, a first and a second variable volume chamber, each arranged to receive an operating fluid, said piston presenting at least a first and a second gasket to prevent seepage of said operating fluid between said chambers, characterised by presenting at least one conduit provided with an end opening into a region interposed between said first and said second gasket of said piston, and an opposite end opening outside said cylinder, to discharge to the outside the fluid which seeps past said gaskets.

Other characteristics of the present invention are defined in the subsequent claims.

Advantageously, the cylinder of the present invention ensures that if two different operating fluids are used (for example air in one chamber and oil in the other), they do not mutually interfere, i.e. the fluid contained in one chamber does not enter the chamber containing the other fluid, to mix therewith and alter its characteristics.

Further characteristics and advantages of the invention will be more apparent from the description of preferred but non-exclusive embodiments of the double-acting operating cylinder of the invention, illustrated by way of non-limiting example in the accompanying drawings, in which:
Figure 1 shows a first embodiment of an operating cylinder according to the invention;
Figures 2, 3, 4 show a second embodiment of the operating cylinder of the invention, in three different operative positions;
Figures 5, 6, 7, 8 show two different embodiments of the cylinder of the invention with a flexible conduit; and
Figures 9, 10 show an embodiment of the cylinder of the invention with a floating piston and rigid conduit.

Said figures show a double-acting operating cylinder, indicated overall by the reference numeral 1.

The cylinder 1 comprises a tubular body 2 presenting a base 3 and a head 4 provided with a through seat 5.

A piston 6 slides within the tubular body 2 and is provided with a rod 7 slidable within the through seat 5 of the head 4.

The cylinder 1 presents a first variable volume chamber 8 defined between the piston 6 and the base 3, and a second variable volume chamber 9 defined between the piston 6 and the head 4; the chambers 8, 9 are arranged to receive an operating fluid fed through connectors 11 and 12 provided on the base 3 and on the head 4 respectively.

The piston 6 presents two annular grooves 15, 16 in which a first and a second gasket 18, 19 are housed to prevent seepage of operating fluid between the chambers 8 and 9.

Advantageously, the cylinder 1 presents a conduit 21 having an end opening in a region interposed between the first and second gasket 18, 19 of the piston 6, and an opposite end opening outside the cylinder 1, to discharge to the outside the fluid which seeps past the gaskets 18, 19.

The piston 6 presents an annular chamber 20 in the region interposed between the gaskets 18, 19; the annular chamber 20 is connected to the conduit 21.

The annular chamber 20 also comprises a recessed portion of the piston 6; in a different example the annular chamber can also be provided in the tubular body 2.

As shown, the conduit 21 extends within the rod 7 and piston 6, and preferably comprises at least one portion bored along a longitudinal axis 25 of the rod 7.

The operating fluid is compressed air or, in other embodiments, oil.

In further embodiments the operating fluid is different in the first and in the second chamber 8, 9; for example it being compressed air in one chamber and oil in the other chamber.

The operation of the double-acting operating cylinder according to the invention is apparent from that described and illustrated, and is substantially as follows.

The double-acting cylinder is firstly set in a predetermined configuration which is to be maintained for a certain time.

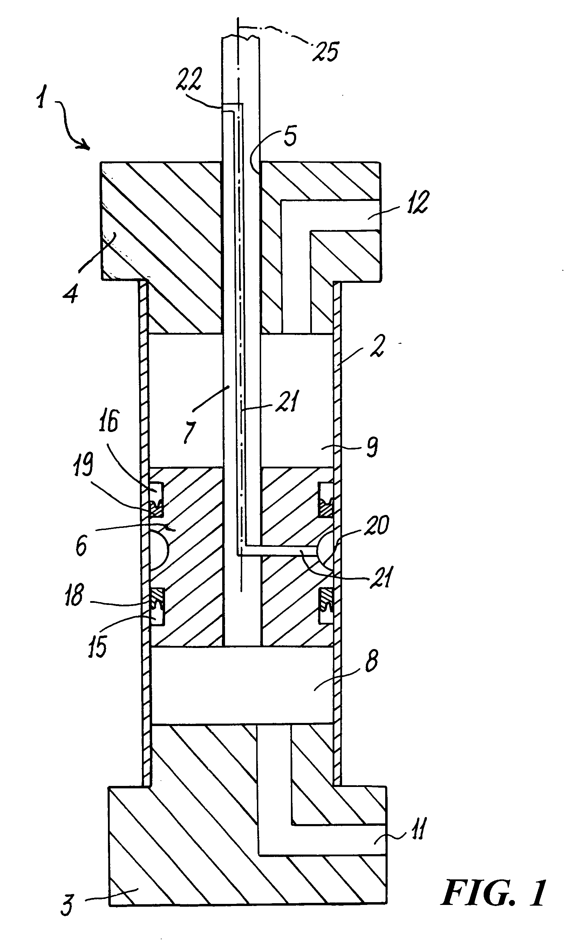

This configuration corresponds to an intermediate piston position within the hollow body 2 (for example as shown in the accompanying Figure 1, with both the chambers 8, 9 containing fluid).

When the piston is in position, the fluid which seeps past the gaskets 18 and 19 is collected in the chamber 20, from there it being discharged through the conduit 21 to outside the cylinder 1.

In this manner the piston adapts to the varying pressure (even if the variation is minimal) but does not begin to wobble because the pressure in the chamber 20 always remains equal to atmospheric and less than the pressure in the chambers 8, 9.

Modifications and variations are evidently possible.

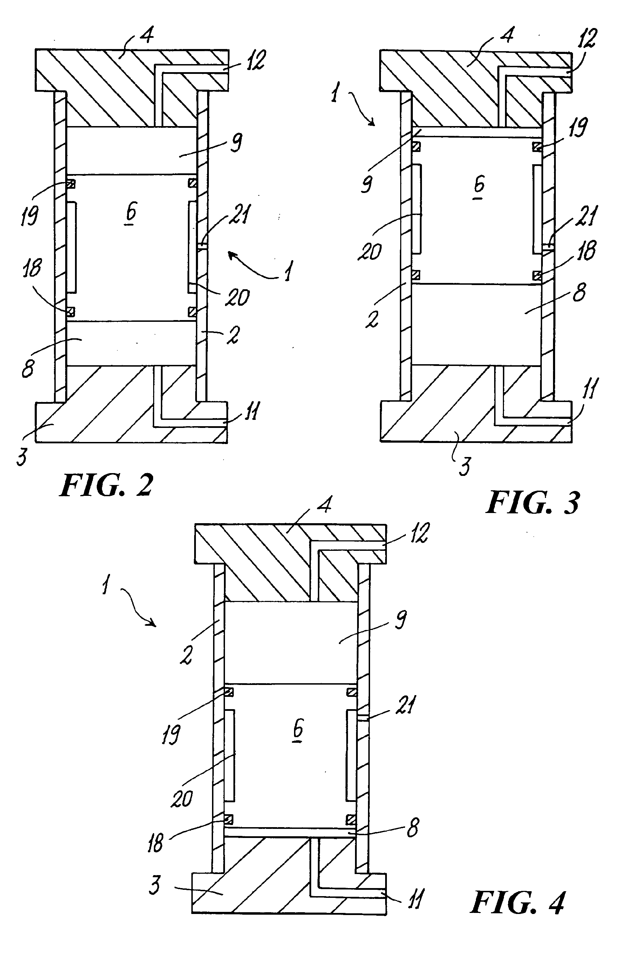

A first variant, shown in Figures 2-4, relates to a rod-less floating cylinder; this cylinder is used for example in applications with magnetic connection to a stator positioned outside the cylinder (the stator is not shown).

This cylinder presents the tubular body 2 carrying the base 3 and the head 4; the base 3 and head 4 in this embodiment are identical and are each provided with a connector 11, 12.

The piston 6 provided with gaskets 18, 19 is slidable within the tubular body 2 and also comprises the annular chamber 20 in the region interposed between said gaskets 18, 19.

The cylinder 1 also presents conduits 21 for connecting the chamber 20 to the outside; as shown, the conduit 21 extends through the tubular body 2 and consists of a radial through hole.

The conduits 21 are preferably greater than one in number, for example three or four (in the present example the cylinder comprises three conduits 21 but only one is visible in section).

In this embodiment, the cylinder 1 can also be without the chamber 20, or the chamber 20 can be formed in the tubular body 2.

During operation, the fluid which seeps past the gaskets 18, 19 and accumulates in the annular chamber 20 (if present) is discharged to the outside through the conduits 21.

In this manner the piston does not begin to wobble because the pressure in the chamber 20 always remains equal to atmospheric pressure and less than the pressure in the chambers 8, 9.

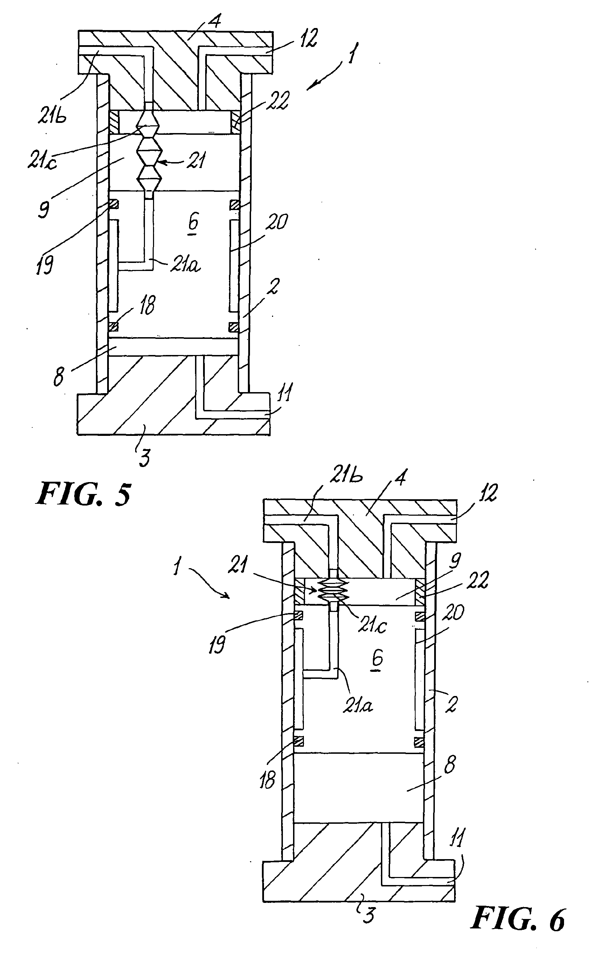

Figures 5 and 6 show a third embodiment of the cylinder 1 according to the invention in which the reference numerals refer to parts equal or similar to those already described.

In this embodiment the conduit 21 comprises a first portion 21a extending within the piston 6, a second portion 21b extending within the head 4 (or within the base 3) and an intermediate third portion 21c extending within the chamber 9.

The intermediate portion 21c is interposed between the ends of the portions 21a and 21b and has its ends fixed to the ends of the portions 21a and 21b; in addition the intermediate portion 21c is flexible and is of bellows type.

Specifically, Figure 5 shows a situation in which the bellows portion 21c is extended and Figure 6 shows a situation in which the portion 21c is compressed to adapt to the variable dimensions of the chamber 9 in which it is inserted.

Advantageously in this embodiment, inside the chamber 9 partially containing the conduit 21 (its flexible portion 21c) there is positioned a spacer 22 which defines the end of stroke of the piston 6 and prevents the piston 6 being able during its movement to squash the bellows portion 21c of the conduit 21.

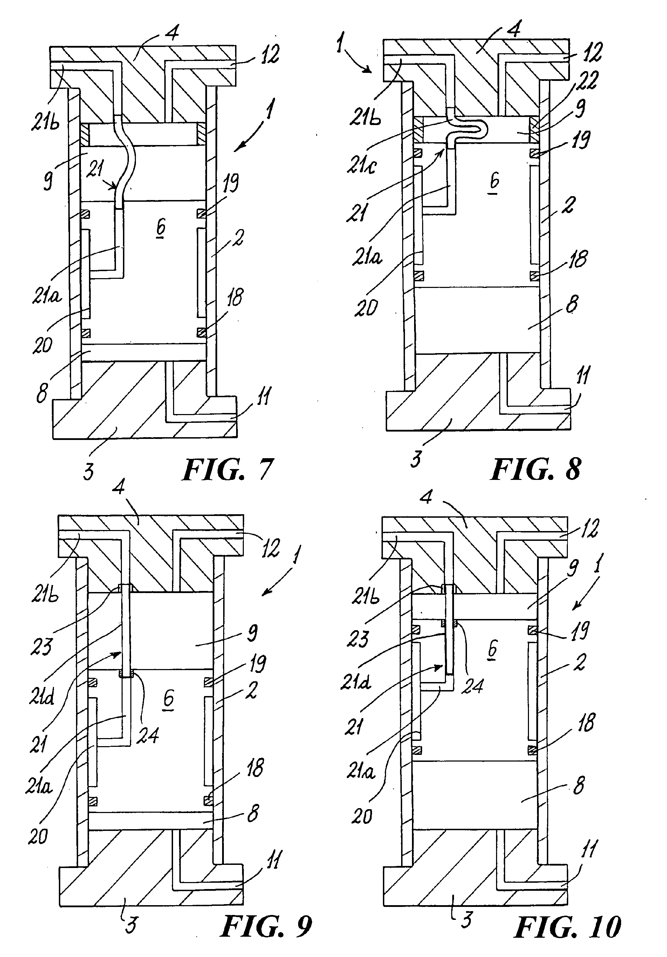

Figures 7, 8 (in which the same reference numerals are used for parts equal or similar to those already described) show a different embodiment in which the cylinder 1 is again provided with the conduit 21 having the portion 21a formed within the piston 6, the portion 21b formed within the head 4 (or base 3) and the flexible portion 21c consisting of a flexible tube (for example of steel or resistant rubber).

The spacer 22 is also present in this embodiment.

Figures 9 and 10 show a further embodiment of the cylinder in which the conduit 21 still has the portions 21a and 21b provided within the piston 6 and within the head 4 (or base 3) respectively, but the intermediate portion consists of a rigid tube 21d fixed to one of the portions 21a or 21b and slidable within the other.

This tube is constructed for example of steel and is particularly suitable for withstanding high pressures.

For example, Figures 9 and 10 show a cylinder 1 in which the tube 21d is fixed (for example by a threaded connection) at 23 to the end of the portion 21b of the conduit 21.

The other end of the tube 21d is slidably connected to the interior of the portion 21a of the conduit 21 via interposed gaskets 24 which ensure that the fluid contained in the chamber 9 does not enter the conduit 21 and hence the chamber 20.

Figures 9 and 10 show two different configurations in which the tube 21d is almost totally extracted from the portion 21a (Figure 9) and a situation in which the tube 21d is almost totally contained in the interior of the tube 21a; it is however apparent that the tube 21d is never completely extracted from the portion 21a during normal operation.

The operation of the cylinder in this embodiment is similar to that already described.

It has been found in practice that the double-acting operating cylinder according to the invention is particularly advantageous because it enables the piston to be maintained in an intermediate position (even under load) for a considerable time without the risk of wobble.

The double-acting operating cylinder so conceived is susceptible to numerous modifications and variations, all falling within the scope of the inventive concept; moreover all details can be replaced by technically equivalent elements.

In practice the materials used and the dimensions can be chosen at will according to requirements and to the state of the art.

## Claims

1. A double-acting operating cylinder (1) comprising a tubular body (2) provided with a base (3) and a head (4), and within which a piston (6) is slidable, said cylinder (1) presenting, defined between said piston (6) and said base (3) and between said piston (6) and said head (4), a first and a second variable volume chamber (8, 9), each arranged to receive an operating fluid, said piston (6) presenting at least a first and a second gasket (18, 19) to prevent seepage of said operating fluid between said chambers (8, 9), **characterised by** presenting at least one conduit (21) provided with an end opening into a region interposed between said first and said second gasket (18, 19) of said piston (6), and an opposite end opening outside said cylinder (1), to discharge to the outside the fluid which seeps past said gaskets (18, 19).

2. A double-acting operating cylinder (1) as claimed in claim 1, **characterised by** presenting an annular chamber (20) in a region interposed between said gaskets (18, 19), said annular chamber (20) being connected to said conduit (21).

3. A double-acting operating cylinder (1) as claimed in one or more of the preceding claims, **characterised in that** said annular chamber (20) comprises a recessed portion of said piston (6).

4. A double-acting operating cylinder (1) as claimed in one or more of the preceding claims, **characterised in that** said head (4) is provided with a through seat (5), said piston (6) being provided with a rod (7) slidable within said through seat (5) of said head (4), said conduit (21) extending at least partially within said rod (7).

5. A double-acting operating cylinder (1) as claimed in one or more of the preceding claims, **characterised in that** said conduit (21) comprises at least a portion bored substantially along a longitudinal axis of said rod (7).

6. A double-acting operating cylinder (1) as claimed in one or more of the preceding claims, **characterised in that** said conduit (21) extends at least partially within said piston (6).

7. A double-acting operating cylinder (1) as claimed in one or more of the preceding claims, **characterised in that** said conduit (21) comprises a portion (21b) which extends within said head (4) or within said base (3).

8. A double-acting operating cylinder (1) as claimed in one or more of the preceding claims, **characterised by** comprising an intermediate portion (21c) which extends within one of said chambers (8, 9) and is interposed between the portion (21a) extending within the piston (6) and the portion (21b) extending within the head (4) or within the base (3) of the cylinder (1).

9. A double-acting operating cylinder (1) as claimed in one or more of the preceding claims, **characterised in that** said intermediate portion (21c) is flexible.

10. A double-acting operating cylinder (1) as claimed in the preceding claim, **characterised in that** a spacer (22) defining the end of stroke of the piston (6) is positioned in the interior of said chamber (9) containing said intermediate portion (21c).

11. A double-acting operating cylinder (1) as claimed in one or more of the preceding claims, **characterised in that** said intermediate portion comprises a rigid tube (21d) which is fixed to one of the portions (21a, 21b) extending within piston (6) or within the head (4) or within the base (3), and is slidable within the other.

12. A double-acting operating cylinder (1) as claimed in one or more of the preceding claims, **characterised in that** said conduit (21) extends at least partially within said tubular body (2).

13. A double-acting operating cylinder (1) as claimed in one or more of the preceding claims, **characterised in that** said operating fluid is compressed air.

14. A double-acting operating cylinder (1) as claimed in one or more of the preceding claims, **characterised in that** said operating fluid is oil.

15. A double-acting operating cylinder (1) as claimed in one or more of the preceding claims, **characterised by** comprising two different operating fluids in said first chamber (8) and in said second chamber (9).
